# EUROPÄISCHE PATENTSCHRIFT

(11) **EP 3 590 590 B1**
(45) Veröffentlichungstag und Bekanntmachung des Hinweises auf die Patenterteilung: **09.12.2020**
(21) Anmeldenummer: 19172461.6
(22) Anmeldetag: 03.05.2019
(51) Int. Cl.: B01D 46/00, B01D 46/44, B22F 3/105, B29C 64/00

(54) **VERFAHREN ZUM FILTERN EINES GASES UND FILTERVORRICHTUNG FÜR EINE VORRICHTUNG ZUM SCHICHTWEISEN HERSTELLEN EINES DREIDIMENSIONALEN OBJEKTS**
METHOD FOR FILTERING A GAS AND FILTER DEVICE FOR A DEVICE FOR LAYERED PRODUCTION OF A THREE-DIMENSIONAL OBJECT
PROCÉDÉ DE FILTRATION D'UN GAZ ET DISPOSITIF FILTRANT POUR UN DISPOSITIF DESTINÉ À LA FABRICATION ADDITIVE D'UN OBJET TRIDIMENSIONNEL

(30) Priorität: 04.07.2018 DE 102018211058
(43) Veröffentlichungstag der Anmeldung: 08.01.2020
(73) Patentinhaber: EOS GmbH Electro Optical Systems, 82152 Krailling (DE)
(72) Erfinder: HEUGEL, Martin, 86899 Landsberg am Lech (DE); REICHMANN, Andreas, 02763 Hirschfelde (DE)
(74) Vertreter: Prüfer & Partner mbB Patentanwälte · Rechtsanwälte

(56) Entgegenhaltungen:
- WO-A2-2015/173515
- DE-A1-102014 207 160
- US-A1- 2015 330 857

## Beschreibung

Die vorliegende Erfindung bezieht sich auf ein Verfahren zum Filtern eines Gases und eine Filtervorrichtung, insbesondere eine Umluftfiltervorrichtung, die beispielsweise in einer Vorrichtung oder einem Verfahren zum Herstellen eines dreidimensionalen Objektes durch schichtweises Verfestigen eines Aufbaumaterials an den dem Querschnitt des herzustellenden Objekts in der jeweiligen Schicht entsprechenden Stellen Verwendung finden kann,

Vorrichtungen und Verfahren dieser Art werden beispielsweise beim Rapid Prototyping, Rapid Tooling und Additive Manufacturing verwendet. Ein Beispiel eines solchen Verfahrens ist als "selektives Lasersintern" oder "selektives Laserschmelzen" bekannt. Dabei wird wiederholt eine dünne Schicht eines pulverförmigen Aufbaumaterials auf ein Baufeld aufgebracht und das Aufbaumaterial in jeder Schicht durch selektives Bestrahlen mit einem Laserstrahl an den dem jeweiligen Querschnitt des Objekts entsprechenden Stellen verfestigt.

Beim Verfestigen von Aufbaumaterial entstehen je nach Art des verwendeten Materials, insbesondere beim Sintern oder Schmelzen von Metallpulver, sogenannte Spratzer. Auch Dämpfe, Rauch, Kondensate und/oder andere Stoffe werden an der Verfestigungsstelle freigesetzt und können zu Verschmutzungen der Vorrichtung führen, sowie zu einer teilweisen Absorption und/oder teilweisen Streuung und damit zu einem teilweisen Verlust der zu dessen selektiver Verfestigung auf das Aufbaumaterial gerichteten Strahlung. Um solche Verschmutzungen aus der Prozesskammer zu entfernen, schlägt die Druckschrift DE 198 53 947 C1 eine Prozesskammer vor, bei der an zwei gegenüberliegenden Enden eine Öffnung für den Schutzgas-Einlass und eine Öffnung für den Schutzgas-Auslass angeordnet sind, durch die ein gerichteter Schutzgasstrom durch die Prozesskammer hindurch erzeugt wird.

Um Schutzgas zu sparen, wird in der Regel eine sogenannte Umluftfiltereinrichtung verwendet, in der das aus der Prozesskammer kommende Schutzgas in einer Filtereinrichtung gereinigt wird und das gefilterte Schutzgas in einem geschlossenen Gaskreislauf der Prozesskammer erneut zugeführt wird. "Umluft" bedeutet in diesem Zusammenhang meist nicht, dass Luft in dem System zirkuliert, sondern wird allgemein für jedes System mit geschlossenem Gaskreislauf verwendet.

Im Betrieb verschmutzt ein Filterelement der Umluftfiltereinrichtung, da sich die aus dem Gas herauszufilternden Stoffe am Filterelement absetzen. Von Zeit zu Zeit muss ein Filterelement der Umluftfiltereinrichtung gereinigt werden. Eine Vorrichtung zum Herstellen eines dreidimensionalen Objekts durch schichtweises Aufbringen und selektives Verfestigen von Aufbaumaterial, bei der ein Filterelement einer Umluftfiltereinrichtung mittels eines Gasdruckstoßes abgereinigt werden kann, ist aus der Druckschrift DE 10 2014 207 160 A1 bekannt, deren diesbezügliche Offenbarung vollumfänglich in die vorliegende Offenbarung miteinbezogen wird.

Jedoch muss auch hier nach einer Anzahl von Abreinigungsvorgängen das Filterelement ausgetauscht bzw. ersetzt werden, da sich mit zunehmender Betriebsdauer vermehrt nicht durch den Gasdruckstoß abreinigbare Verschmutzungen an dem Filterelement anlagern bzw. der durch die an dem Filterelement anhaftenden Verschmutzungen gebildete sogenannte Filterkuchen nicht mehr ausreichend durch den Gasdruckstoß von dem Filterelement abgelöst werden kann. Dazu muss der Schutzgaskreislauf unterbrochen und die Filteranlage geöffnet werden, wodurch Schutzgas verloren gehen kann und währenddessen der Bauvorgang unterbrochen werden muss.

Andererseits kann der durch die Prozesskammer hindurch geleitete Schutzgasstrom durch ein nicht mehr ausreichend abreinigbares Filterelement negativ beeinflusst werden, z.B. in seiner Geschwindigkeit und/oder Volumenflussrate, was wiederum einen unzureichenden Abtransport von Verunreinigungen aus der Prozesskammer bewirken und sich so negativ auf die Qualität des herzustellenden Objekts auswirken kann.

Der Zeitpunkt zum Auswechseln eines abreinigbaren Filterelements ist daher unter Abwägung der o.g. Gesichtspunkte zu treffen und ist u.a. abhängig von den für den Bauvorgang verwendeten Prozessparametern, wie z.B. Belichtungsstrategien, Laserparametern, sowie dem verwendeten Aufbaumaterial.

Eine Aufgabe der vorliegenden Erfindung besteht darin, ein verbessertes Verfahren zum Filtern eines Gases in einer Filtervorrichtung und eine derartige Filtervorrichtung, insbesondere einer Umluftfiltervorrichtung, bereitzustellen. Insbesondere wird im Rahmen einer solchen Verbesserung darauf abgezielt, ein Verfahren zum Ermitteln eines Zeitpunkts für das Ersetzen eines abreinigbaren Filterelements bereitzustellen, das automatisch durchführbar ist und/oder den Zeitpunkt in Abhängigkeit verwendeter Prozessparameter ermitteln kann.

Eine weitere Aufgabe der vorliegenden Erfindung besteht darin, eine Vorrichtung und ein Verfahren zum Herstellen eines dreidimensionalen Objekts unter Verwendung einer solchen Filtervorrichtung bzw, eines solchen Verfahrens zum Filtern eines Gases bereitzustellen.

Die Aufgabe wird gelöst durch ein Verfahren zum Ermitteln eines Zeitpunkts gemäß Anspruch 1, ein Verfahren zum Filtern eines Gases gemäß Anspruch 10, ein Herstellungsverfahren gemäß Anspruch 11, eine Filtervorrichtung gemäß Anspruch 13 und eine Herstellvorrichtung gemäß Anspruch 14. Weiterbildungen der Erfindung sind jeweils in den Unteransprüchen angegeben, wobei die in den jeweiligen Unteransprüchen zu den einzelnen Anspruchskategorien genannten Merkmale auch als Weiterbildung aller anderen Anspruchskategorien verstanden werden können.

Erfindungsgemäß ist ein Verfahren zum Ermitteln eines Zeitpunkts für das Ersetzen eines abreinigbaren Filterelements in einem Gasstrom bereitgestellt, wobei in dem Gasstrom ein Filterelement vorgesehen ist, das jeweils nach einem Betriebszeitintervall abzureinigen ist und welches spätestens nach einer Anzahl A von Betriebszeitintervallen durch ein Auswechsel-Filterelement zu ersetzen ist. Das Verfahren umfasst die Schritte
- Messen eines Messzeitraums, der jeweils in einem Betriebszeitintervall ab einem definierten Anfangszeitpunkt verstreicht, bis ein definierter Differenzdruck zwischen dem Druck stromaufwärts und dem Druck stromabwärts von dem Filterelement im Gasstrom erreicht wird, während mindestens zweier Betriebszeitintervalle,
- Erzeugen eines Referenzwerts für die Messzeiträume,
- Vergleichen eines gemessenen Messzeitraums für ein beliebiges nachfolgendes Betriebszeitintervall mit dem Referenzwert,
- Erzeugen eines Signals, wenn der gemessene Messzeitraum für das beliebige nachfolgende Betriebszeitintervall relativ zu dem Referenzwert um ein vorbestimmtes Maß verkürzt ist,
wobei mindestens das erste, bevorzugt das erste und das zweite, noch bevorzugter das erste bis n-te Betriebszeitintervall, wobei n um einen vorbestimmten Wert kleiner als A ist, zur Bildung des Referenzwerts nicht herangezogen wird.

Das abreinigbare Filterelement ist jeweils nach einem Betriebszeitintervall "abzureinigen" und spätestens nach einer Anzahl A von Betriebszeitintervallen durch ein Auswechsel-Filterelement "zu ersetzen", d.h. es handelt sich hierbei um Betriebsempfehlungen, die einzuhalten sind um ein gewünschtes Ergebnis zu erreichen bzw. sicherzustellen, wie beispielsweise einen ausreichend reinen Gasstrom und/oder einen Gasstrom mit gewünschten Eigenschaften (z.B. Geschwindigkeit, Volumenstrom) und/oder eine Prozessqualität und/oder Sicherheitsanforderungen.

Das Auswechsel-Filterelement kann dabei ein anderes, d.h. insbesondere ein neues, unverschmutztes, Filterelement sein. Es kann jedoch auch ein bereits verwendetes und extern von der Filtervorrichtung (mindestens vor-)gereinigtes Filterelement verwendet werden, z.B. kann also auch dasselbe Filterelement nach einer Reinigung sollen wieder eingesetzt werden.

Der definierte Anfangszeitpunkt eines Betriebszeitintervalls, zu dem die Messung des Messzeitraum, d.h. das Ermitteln der Zeitdauer, beginnt, kann beispielsweise ein Zeitpunkt nach dem Abreinigen des Filterelements sein, zu dem sich wieder ein definierter Gasdruck stromaufwärts und/oder stromabwärts von dem Filterelement in dem Gasstrom oder eine definierte Druckdifferenz der beiden Drücke eingestellt hat, und/oder zu dem der Gasstrom wieder eine gewünschte Eigenschaft (z.B. Strömungsgeschwindigkeit und/oder Volumenstromrate) aufweist und/oder ein Zeitpunkt in einem definierten zeitlichen Abstand zu dem Beginn des vorhergehenden Abreinigunsvorgangs des Filterelements. Generell wird durch den definierten Anfangszeitpunkt die Reproduzierbarkeit der Messung der Messzeiträume geschaffen, wodurch die Vergleichbarkeit der Messzeiträume verschiedener Betriebszeitintervalle gegeben ist.

Der Referenzwert kann dabei beispielsweise aus einem Durchschnittswert erzeugt werden, der aus den heranzuziehenden Messzeiträumen gebildet wird. Der Referenzwert kann beispielsweise auch aus einem Minimal- und/oder Maximalwert der heranzuziehenden Messzeiträume gebildet werden oder aus gewichteten Messwerten. Allgemein wird der Referenzwert nach einer vorab festgelegten Rechenvorschrift aus den heranzuziehenden Messzeiträumen ermittelt.

Dadurch, dass zumindest das erste Betriebszeitintervall nicht zur Bildung des Referenzwerts herangezogen wird, können nicht charakteristische Betriebszeitintervalle von der Referenzwertbildung ausgeschlossen werden. Insbesondere das erste Betriebszeitintervall nach dem Ersetzen des Filters und eventuell unmittelbar auf dieses folgende Betriebszeitintervallen können gemäß der Beobachtung der Erfinder, insbesondere für das jeweilige Filterelement bzw. die Prozessparameter, uncharakteristisch lang sein, da sich zuerst einmal Filtergut an dem Filterelement absetzen muss, damit das Filterelement seine typischen Eigenschaften erlangt, d.h. es muss sich zuerst einmal eine gewisse "Grundverschmutzung" an dem Filter ablagern, die auch durch den Gasdruckstoß bei den Abreinigungsvorgängen im Wesentlichen nicht abreinigbar ist.

Mit dem erfindungsgemäßen Verfahren kann ein Zeitpunkt zum Ersetzen eines Filterelements ermittelt werden, der lediglich von der Dauer der Abreinigungsintervalle abhängig ist, die ein Maß für die Verunreinigung des Filterelements sind. So kann der Zeitpunkt beispielsweise auf einfache Art und Weise auch dann ermittelt werden, wenn Prozessparameter, die z.B. die Menge der sich am Filterelement ablagernden Partikel beeinflussen, geändert werden und/oder nicht bekannt sind. Langwierige material- und/oder prozessspezifische Tests entfallen somit. Auch kann das Verfahren beispielsweise automatisch von dem System selbst durchgeführt werden, d.h. auf Basis der automatischen Datenauswertung aus den ersten Abreinigungszyklen berechnet das System selber, wann der Benutzer zum Ersetzen des Filterelements aufgefordert werden muss, das System ist also selbstlernend. Vorzugsweise wird das Signal erzeugt, wenn der gemessene Messzeitraum relativ zu dem Referenzwert um mindestens 10%, bevorzugt mindestens 20%, noch mehr bevorzugt um mindestens 30% verkürzt ist. Damit ist beispielsweise ein Maß gegeben, das für die Beurteilung gemessener Messzeiträume gegenüber dem Referenzwert herangezogen werden kann.

Vorzugsweise gibt das Signal den Zeitpunkt, zu dem es erforderlich ist, das Filterelement durch das Auswechsel-Filterelement zu ersetzen, an. "Erforderlich" ist der Ersatz durch das Auswechsel-Filterelement beispielsweise bereits dann, wenn dies gemäß eine Qualitätslogik empfohlen, d.h. angeraten ist, d.h. wenn ein bestimmter Schwellenwert im Rahmen des erfindungsgemäßen Verfahrens über- bzw. unterschritten wurde. Mit anderen Worten, "erforderlich" impliziert, dass das Filterelement aus Qualitäts- bzw. Prozesssicherheitsgründen ersetzt werden soll.

Damit kann beispielsweise der Benutzer zum Ersetzen des Filterelements aufgefordert werden, so dass das Filterelement nicht zu früh, d.h. wenn es noch ausreichend durch den Gasdruckstoß gereinigt werden kann, oder zu spät, d.h. wenn die Reinhaltung und/oder Aufrechterhaltung des Gasstroms nicht mehr ausreichend gegeben ist und/oder die Abreinigungsintervalle zu kurz werden, ersetzt wird. Das Signal kann beispielsweise ein optisches Signal sein, z.B. ein Licht oder eine Anzeige auf einem Display, und/oder ein akustisches Signal, z.B. ein Warnton.

Vorzugsweise werden zur Berechnung des Referenzwerts drei oder mehr Betriebszeitintervalle herangezogen. Dadurch kann beispielsweise die Repräsentativität des Referenzwerts für die Messzeiträume verbessert werden.

Vorzugsweise werden, in Abhängigkeit von einer Varianz der für die Referenzwertbildung gemessenen Messzeiträume, bestimmte Betriebszeitintervalle bei der Erzeugung des Referenzwerts nicht herangezogen, vorzugsweise solche, die auf das erste Betriebszeitintervall folgen, und/oder zusätzliche Betriebszeitintervalle werden bei der Erzeugung des Referenzwerts hinzugezogen, vorzugsweise solche, die auf einen letzten für die Referenzwertbildung gemessenen Messzeitraum folgen. Somit können beispielsweise uncharakteristische Betriebszeitintervalle von der Referenzwertbildung ausgeschlossen werden und/oder weitere charakteristische Betriebszeitintervalle hinzugezogen werden,

Vorzugsweise ist der Gasstrom Teil eines geschlossenen Gaskreislaufs, in dem eine Umwälzturbine vorgesehen ist, und das Signal wird erzeugt, wenn eine Turbinenlaufzeit in einem vorbestimmten Bereich liegt und/oder wenn ein Anstieg der Turbinenleistung in einem vorbestimmten Bereich liegt und/oder wenn die Anzahl der Betriebszeitintervalle seit dem Ersetzen des Filterelements in einem vorbestimmten Bereich liegt. Damit können beispielsweise zusätzliche Kriterien für das Ersetzen des Filterelements bereitgestellt sein. Die o.g. Kriterien können auch als weitere Kriterien für das Ersetzen des Filterelements bereitgestellt sein, d.h. die o.g. Kriterien können ein Ersetzen des Filterelements auch bereits dann veranlassen, wenn nach dem anhand der Betriebszeitintervalle ermittelten Kriterium noch kein Ersetzen des Filterelements erforderlich wäre.

Vorzugsweise ist das Auswechsel- Filterelement ein gebrauchtes Filterelement. So kann beispielsweise ein bereits verwendetes Filterelement gereinigt und wieder verwendet werden, wodurch Kosten gespart werden können.

Vorzugsweise sind die Betriebszeitintervalle, die für die Referenzwertbildung nicht herangezogen werden, um mindestens ein vorbestimmtes Maß länger als die Betriebszeitintervalle, die für die Referenzwertbildung herangezogen werden. Dadurch können z.B. untypisch lange Betriebszeitintervalle, beispielsweise in denen sich wie oben beschrieben das Filterelement erst mit Filtergut belegen muss um seine typischen Filtereigenschaften zu erlangen, von der Referenzwertbildung ausgeschlossen werden.

Vorzugsweise wird der Referenzwert für die Messzeiträume anhand eines Durchschnittswerts der gemessenen Messzeiträume erzeugt. Damit ist beispielsweise eine Rechenvorschrift zum Erzeugen des Referenzwerts gegeben.

Ein erfindungsgemäßes Verfahren zum Filtern eines Gases in einem Umluftsystem mit einem, bevorzugt geschlossenen, Gaskreislauf, enthält die Schritte:
- Leiten des Gases durch ein abreinigbares Filterelement,
- Abreinigen des abreinigbaren Filterelements nach jeweils einem Betriebszeitintervall und
- Ersetzen des Filterelements spätestens nach einer Anzahl A von Betriebszeitintervallen durch ein Auswechsel-Filterelement, wobei der Zeitpunkt für das Ersetzen des Filterelements nach einem oben beschriebenen Verfahren zum Ermitteln eines Zeitpunkts für das Ersetzen eines abreinigbaren Filterelements bestimmt wird, Damit können beispielsweise die oben in Bezug auf das Verfahren zum Ermitteln eines Zeitpunkts für das Ersetzen eines abreinigbaren Filterelements beschriebenen Wirkungen auch in einem Verfahren zum Filtern eines Gases in einem Umluftsystem erzielt werden.

Ein erfindungsgemäßes Verfahren zum Herstellen eines dreidimensionalen Objekts durch schichtweises Aufbringen und selektives Verfestigen von Aufbaumaterial umfasst die Schritte
(a) Aufbringen einer Schicht des Aufbaumaterials innerhalb eines Baufelds im Inneren einer Prozesskammer,
(b) selektives Verfestigen der aufgebrachten Schicht durch Verfestigen der Stellen der Schicht, die dem Querschnitt des dreidimensionalen Objekts in der Schicht entsprechen, insbesondere mittels Einwirkung einer Strahlung,
(c) Wiederholen der Schritte (a) und (b), bis das dreidimensionale Objekt fertiggestellt ist,
wobei während der Herstellung des dreidimensionalen Objekts ein Gas durch die Prozesskammer geleitet wird, wobei das Gas in einem, bevorzugt geschlossenen, Gaskreislauf umläuft und durch ein abreinigbares Filterelement geleitet wird, das abreinigbaren Filterelement nach jeweils einem Betriebszeitintervall abgereinigt wird und das Filterelement spätestens nach einer Anzahl A von Betriebszeitintervallen durch ein Auswechsel-Filterelement ersetzt wird, und wobei der Zeitpunkt für das Ersetzen eines Filterelements nach einem oben beschriebenen Verfahren zum Ermitteln eines Zeitpunkts für das Ersetzen eines abreinigbaren Filterelements bestimmt wird. So kann beispielsweise bei einem derartigen additiven Herstellungsverfahren der Zeitpunkt für das Ersetzen eines Filterelements auf einfache Art und Weise bestimmt werden, z.B. ohne die dem Herstellungsprozess zugrunde liegenden Prozessparameter, wie z.B. Belichtungsmuster und/oder Parameter der Verfestigungsstrahlung, und/oder materialspezifische Parameter explizit zu berücksichtigen.

Vorzugsweise wird in dem additiven Herstellungsverfahren das Signal erzeugt, wenn eine Dauer der Betriebszeit einer eine Strahlung erzeugenden Strahlungsquelle ein vorbestimmtes Maß übersteigt. Die Betriebsdauer der Strahlungsquelle kann beispielsweise als zusätzliches Kriterium für das Ersetzen des Filterelements bereitgestellt sein und/oder als weiteres Kriterium für das Ersetzen des Filterelements, d.h. das Ersetzen des Filterelements kann nach einer vorgegebenen Betriebszeit der Strahlungsquelle veranlasst werden, auch wenn nach dem anhand der Betriebszeitintervalle ermittelten Kriterium noch kein Ersetzen des Filterelements erforderlich wäre. Die Betriebszeit der Strahlungsquelle ist ein gutes Maß für die Menge der entstandenen Verunreinigungen, da diese vorwiegend während des Schritts des selektiven Verfestigens entstehen.

Eine erfindungsgemäße Filtervorrichtung umfasst ein in einem Gasstrom befindliches abreinigbares Filterelement, das jeweils nach einem Betriebszeitintervall abzureinigen ist und welches spätestens nach einer Anzahl A von Betriebszeitintervallen durch ein Auswechsel-Filterelement zu ersetzen ist, sowie eine Messvorrichtung zum Messen eines Messzeitraums, der jeweils in einem Betriebszeitintervall ab einem definierten Anfangszeitpunkt verstreicht, bis ein Differenzdruck zwischen dem Druck stromaufwärts und dem Druck stromabwärts von dem Filterelement im Gasstrom erreicht wird, während mindestens zweier Betriebszeitintervalle. Weiter umfasst die Filtervorrichtung eine Signalerzeugungsvorrichtung, und ist dazu ausgebildet, einen Zeitpunkt für das Einsetzen eines abreinigbaren Filterelements in der Filtervorrichtung nach einem oben beschriebenen Verfahren zum Ermitteln eines Zeitpunkts für das Ersetzen eines abreinigbaren Filterelements zu ermitteln. Damit können beispielsweise die oben in Bezug auf die erfindungsgemäßen Verfahren beschriebenen Wirkungen auch mit einer Filtervorrichtung erzielt werden.

Vorzugsweise ist die Filtervorrichtung als Umluftsystem ausgebildet, das einen geschlossenen Gaskreislauf aufweist, in dem eine Umwälzturbine vorgesehen ist. Dadurch kann beispielsweise Gas gespart werden, da dieses in der Filtervorrichtung gereinigt und dann beispielsweise einer Prozesskammer einer additiven Herstellvorrichtung erneut zugeführt werden kann.

Eine erfindungsgemäße Vorrichtung zum Herstellen eines dreidimensionalen Objekts durch schichtweises Aufbringen und selektives Verfestigen von Aufbaumaterial umfasst eine Prozesskammer zum Herstellen des dreidimensionalen Objekts, eine Einrichtung zum Leiten eines Gasstroms durch die Prozesskammer und eine Verfestigungseinrichtung zum Verfestigen des Aufbaumaterials, wobei die Einrichtung zum Leiten eines Gasstroms durch die Prozesskammer eine oben beschriebene Filtervorrichtung aufweist und vorzugsweise als System mit geschlossenem Gaskreislauf ausgebildet ist. Damit können beispielsweise die oben in Bezug auf die erfindungsgemäßen Verfahren und/oder die Filtervorrichtung beschriebenen Wirkungen auch mit einer additiven Herstellvorrichtung erzielt werden.

Weitere Merkmale und Zweckmäßigkeiten der Erfindung ergeben sich aus der Beschreibung eines Ausführungsbeispiels für die erfindungsgemäße Vorrichtung und das erfindungsgemäße Verfahren unter Bezugnahme auf die beigefügten Zeichnungen.
- Fig. 1: ist eine schematische, im Schnitt dargestellte Ansicht einer Vorrichtung zum schichtweisen Herstellen eines dreidimensionalen Objekts gemäß einer Ausführungsform der vorliegenden Erfindung.
- Fig. 2: ist eine Messkurve, welche gemäß einer Ausführungsform der vorliegenden Erfindung zum Ermitteln eines Zeitpunkts für das Ersetzen eines abreinigbaren Filterelements herangezogen wird.
- Fig. 3: ist ein schematisches Blockdiagramm eines Verfahrens zum Ermitteln eines Zeitpunkts für das Ersetzen eines abreinigbaren Filterelements gemäß einem Ausführungsbeispiel der vorliegenden Erfindung.

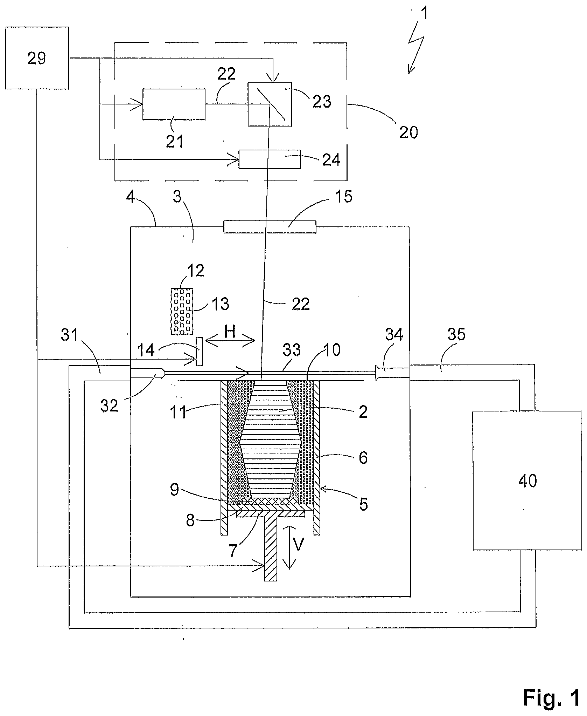

Im Folgenden wird mit Bezug auf Fig. 1 eine Vorrichtung gemäß einer Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. Durch die obere Öffnung des Behälters 5 ist eine Arbeitsebene 10 definiert, wobei der innerhalb der Öffnung liegende Bereich der Arbeitsebene 10, der zum Aufbau des Objekts 2 verwendet werden kann, als Baufeld bezeichnet wird,

In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung 22.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird.

Zum Erzeugen eines Gasstroms 33 oberhalb der Arbeitsebene 10 enthält die Lasersintervorrichtung 1 ferner einen Gaszuführkanal 31, eine Gaseinlassdüse 32, eine Gasauslassdüse 34 und einen Gasabführkanal 35. Auch die Gaszufuhr und -abfuhr kann von der Steuereinheit 29 gesteuert sein. Über den Gasabführkanal 35 wird das aus der Prozesskammer 3 austretende Gas einer Umluftfiltervorrichtung 40 zugeführt, die das Gas filtert und über den Gaszuführkanal 31 wieder der Prozesskammer 3 zugeführt. Dadurch ist ein Umluftsystem mit einem geschlossenen Gaskreislauf gebildet,

Die Umluftfiltervorrichtung 40 enthält zumindest ein in Fig. 1 nicht gezeigtes abreinigbares Filterelement, sowie eine Turbine (ebenfalls nicht gezeigt). Das Filterelement kann z.B. durch einen Gasdruckstoß abreinigbar sein und ist dazu ausgebildet die bei dem Verfestigen des Pulvermaterials entstehenden Partikel (Rauch- und Schmauchpartikel) zurück zu halten.

Im Betrieb wird zunächst zum Aufbringen einer Pulverschicht der Träger 7 um eine Höhe abgesenkt, die der gewünschten Schichtdicke entspricht. Unter Verwendung des Beschichters 14 wird nun eine Schicht des pulverförmigen Aufbaumaterials 13 aufgetragen. Die Aufbringung erfolgt zumindest über den gesamten Querschnitt des herzustellenden Objekts 2, vorzugsweise über das gesamte Baufeld. Anschließend wird der Querschnitt des herzustellenden Objekts 2 von dem Laserstrahl 22 abgetastet, so dass das pulverförmige Aufbaumaterial 13 an diesen Stellen verfestigt wird. Diese Schritte werden solange wiederholt, bis das Objekt 2 fertiggestellt ist und dem Bauraum entnommen werden kann,

Während des Aufbaus des Objekts 2 kann ein Schutzgasstrom 33 über die Arbeitsebene 10 geleitet werden, der bewirkt, dass Spratzer, Rauche, Dämpfe und/oder Gase, die beim Erhitzen des Pulvers durch den Laser gebildet werden, abtransportiert werden. Durch die in der Umluftfiltervorrichtung 40 angeordnete Turbine wird dabei ein kontinuierlicher Schutzgasstrom aufrechterhalten, d.h. bei abnehmender Strömungsgeschwindigkeit und/oder abnehmendem Volumenstrom wird die Turbinenleistung entsprechend erhöht. Der im Wesentlichen konstante Schutzgasstrom 33 kann - etwa bei ansteigendem Gaswiderstand durch Verschmutzungen des Filterelements - durch eine Regelung realisiert werden, die auf Basis von durch eine Anzahl von Differenzdrucksensoren (nicht gezeigt) generierten Differenzdruckwerten des Schutzgasstroms betrieben wird.

Der Schutzgasstrom durchläuft das abreinigbare Filterelement der Umluftfiltervorrichtung 40, wodurch sich die beim Lasersintern entstehenden feinen Rauch- und Metallpartikel an dem Filterelement absetzen und im Lauf der Zeit ansammeln. Sie werden durch den von dem Schutzgasstrom ausgeübten Druck verdichtet und können je nach Material auch miteinander verkleben. So bildet sich im Lauf der Zeit ein Filterbelag aus einer Schicht verdichteter und/oder aneinander klebender Partikel, der im Allgemeinen als "Filterkuchen" bezeichnet wird. Er behindert den Schutzgasstrom und führt zu einem immer größer werdenden Druckabfall an dem Filter, also zu einer Erhöhung der Druckdifferenz zwischen dem Druck stromaufwärts und dem Druck stromabwärts von dem Filterelement im Gasstrom,

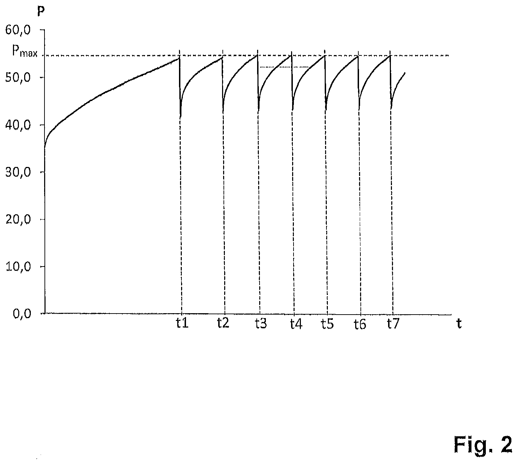

Daher wird das Filterelement von Zeit zu Zeit durch einen Gasdruckstoß abgereinigt, um den Filterkuchen zu entfernen. Der Gasdruckstoß durchdringt das abreinigbare Filterelement dabei entgegen der normalen Filterrichtung, in der das zu filternde Schutzgas durch das Filterelement fließt. Das Abreinigen des Filterelements wird verschmutzungsabhängig durchgeführt, indem die Druckdifferenz zwischen beiden Seiten des Filterelements, also stromaufwärts und stromabwärts von dem Filterelement im Gasstrom, gemessen wird, die sich durch die Verschmutzung erhöht. Da die Turbinenleistung abhängig von durch Verschmutzung des Filters entstehende Druckänderungen geregelt wird um einen im Wesentlichen konstanten Schutzgasstrom aufrecht zu erhalten, kann das Abreinigen des Filterelements auch in Abhängigkeit der Turbinenleistung durchgeführt werden, wie in der Messkurve in Fig. 2 gezeigt.

In dem Diagramm in Fig. 2 ist der zeitliche Verlauf der Turbinenleistung in % ihrer Nennleistung graphisch über die Zeit t dargestellt. Der zeitpunkt t0 (nicht dargestellt) bezeichnet dabei den Zeitpunkt, zu dem das Filterelement in die Filtereinrichtung eingesetzt wurde. Zu den auf der Abszissenachse gekennzeichneten Zeitpunkten t1 bis t7 (allgemein: tn) wird das Filterelement jeweils wie oben beschrieben durch einen Gasdruckstoß abgereinigt. Nach einer derartigen Abreinigung des Filterelements kann das Gas weitestgehend ungehindert durch das Filterelement hindurchströmen, da der Gaswiderstand des abgereinigten Filterelements vergleichsweise gering ist, d.h. um einen im Wesentlichen konstanten Schutzgasstrom aufrecht zu erhalten ist eine vergleichsweise niedrige Turbinenleitung P erforderlich. Mit der Zeit lagern sich zunehmend Verunreinigungen an dem Filterelement ab, wodurch der Gaswiderstand an dem Filterelement zunimmt und die Turbinenleistung erhöht werden muss, um einen im Wesentlichen konstanten Schutzgasstrom aufrecht zu erhalten. Bei einem vorab festgelegten Grenzwert der Druckdifferenz zwischen beiden Seiten des Filterelements, d.h. stromaufwärts und stromabwärts von dem Filterelement im Gasstrom, der der Turbinenleistung Pₘₐₓ in Fig. 2 entspricht, wird das Filterelement erneut abgereinigt.

So ergeben sich die in Fig. 2 gezeigten Betriebszeitintervalle T1 = [t0; t1], T2 = [t1; t2] bis T7 = [t6; t7] (allgemein: Tn = [t(n-1); tn]) zwischen den entsprechenden Abreinigungs-Zeitpunkten. Das erste Betriebszeitintervall T1 ist länger als die nachfolgenden Betriebszeitintervalle Ti mit i ≥ 2, da sich auf dem neu eingesetzten Filterelement mehr Verunreinigungen ablagern können, d.h. der Zeitraum bis zur Abreinigung ist länger. In den nachfolgenden Betriebszeiträumen Ti (i ≥ 2) hingegen sind bereits nicht abreinigbare Rückstände des Filterkuchens an dem Filterelemennt vorhanden, so dass sich der vorab festgelegte Druckdifferenzgrenzwert schneller einstellt, was zu einem kürzeren Intervall Ti führt.

Bei der in Fig. 2 gezeigten Messkurve ist auch das zweite Betriebszeitintervall T2 ein wenig länger als die nachfolgenden Betriebszeitintervalle T3 bis T7. Ab dem Betriebszeitintervall T3 stellt sich im Wesentlichen eine konstante Betriebszeitintervalldauer ein.

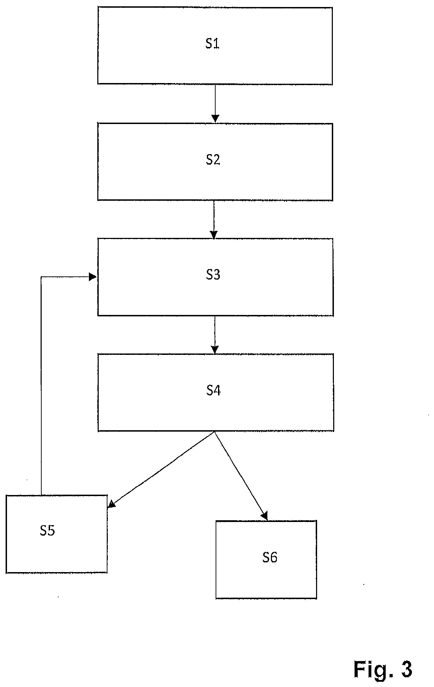

Im Folgenden wird mit Bezug auf Fig. 3 ein Verfahren zum Ermitteln eines Zeitpunkts für das Ersetzen eines Filterelements in der Filtervorrichtung 40 beschrieben. Hierzu wird in Schritt S1 die Länge T1, T2, T3 der ersten drei in Fig. 2 gezeigten Betriebszeitintervalle [t0; t1], [t1; t2] und [t2; t3] gemessen, wobei gilt: T1 = t1-t0, T2 = t2-t1 und T3 = t3-t2.

In Schritt S2 wird anschließend der Mittelwert R = (T2+T3)/2 des zweiten und dritten Betriebszeitintervalls gebildet und dieser als Referenzwert gespeichert. Da das erste Betriebszeitintervall uncharakteristisch lang ist, wird es nicht zur Ermittlung des Referenzwerts hinzugezogen,

Anschließend wird in Schritt S3 die Länge T4 des vierten Betriebszeitintervalls [t3; t4] gemessen und diese in Schritt S4 mit dem Referenzwert R verglichen. Hierzu wird der Quotient T4/R gebildet und geprüft, ob dieser einen vorgegebenen Grenzwert unterschreitet. Als Grenzwert wird vorzugsweise 0,9 gewählt, weiter bevorzugt 0,8, noch weiter bevorzugt 0,7. Falls der Grenzwert nicht unterschritten wird, so wird in Schritt S5 ein Befehl zum Messen des nächsten Betriebszeitintervalls (in diesem Fall T5) gegeben und damit wiederum die Schritte S3 und S4 durchgeführt.

Die Schritte S3 bis S5 werden für aufeinanderfolgende Betriebszeitintervalle so lange durchgeführt, bis der vorgegebene Grenzwert für ein Betriebszeitintervall Ti unterschritten wird. Daraufhin wird in Schritt S6 ein Signal erzeugt bzw. eine Information an den Benutzer ausgegeben um diesen zu einem Ersetzen des Filterelements aufzufordern.

Das Verfahren zum Ermitteln eines Zeitpunkts für das Ersetzen des Filterelements in der Filtervorrichtung 40 kann einmalig für das erste eingesetzte Filterelement durchgeführt werden und der so ermittelte Wechselzeitpunkt für den gesamten Bauvorgang beibehalten werden. Das Verfahren kann auch für jedes Austausch-Filterelement nach dessen Einsetzen durchgeführt werden.

In dem oben beschriebenen Verfahren zum Ermitteln des Wechselzeitpunkts für das Filterelement müssen nicht zwangsweise das zweite und das dritte Betriebszeitintervall für die Mittelwertbildung herangezogen werden. Beispielsweise kann auch das zweite Intervall durch das vierte Intervall ersetzt werden, da das zweite Intervall wie das erste Intervall länger ist als die darauf folgenden.

Um diese längeren, uncharakteristischen Betriebszeitintervalle, die für die Mittelwertbildung nicht berücksichtigt werden sollen, zu ermitteln, kann auch deren Varianz bzw. Abweichung vom Mittelwert berechnet werden.

Ferner kann auch ein Mittelwert aus mehr als zwei Betriebszeitintervallen gebildet werden, beispielsweise aus drei oder mehr Intervallen. Auch muss für die Referenzwertbildung nicht der Mittelwert der Intervalle berechnet werden, der Referenzwert kann allgemein gemäß einer vorab festgelegten Rechenvorschrift aus den hinzuzuziehenden Betriebszeitintervallen bestimmt werden.

Gemäß Fig. 2 wird als Messzeitraum der Zeitraum zwischen zwei Abreinigungen des Filterelements, also jeweils des gesamten Betriebszeitintervalls, gemessen. Es ist jedoch auch möglich, den Messzeitraum nur während eines Abschnitts des jeweiligen Betriebszeitintervalls zu messen. Hierfür kann z.B. eine Druckdifferenz zwischen dem Druck stromaufwärts und stromabwärts des Filterelements in dem Gasstrom festgelegt werden, und die Messung zu dem Zeitpunkt begonnen werden, zu dem nach einem Abreinigungsvorgang diese vorab festgelegte Druckdifferenz wieder erreicht ist. Ebenso kann als Endzeitpunkt für die Messung das Erreichen einer vorab festgelegte Druckdifferenz, die kleiner ist als die Druckdifferenz, die ein erneutes Abreinigen des Filterelements veranlasst, festgelegt sein.

Weiterbildungen der Erfindung sind möglich. So können beispielsweise noch andere Kriterien für das Ersetzen des Filterelements vorgesehen sein. Beispielsweise kann das Filterelement nach einer vorgegebenen Turbinenlaufzeit, d.h. einer Betriebszeit der Turbine, oder nach einer vorgegebenen Belichtungszeit, d.h. einer Betriebszeit des Lasers, ersetzt werden. Insbesondere die Belichtungszeit ist ein gutes Maß für die an dem Filterelement anfallenden Verunreinigungen, da diese vor allem während des Belichtens der aufgebrachten Pulverschichten entstehen. Das Filterelement kann beispielsweise auch bei einem vorab festgelegten Anstieg der Turbinenleistung ersetzt werden, da dieser bei konstant gehaltenem Schutzgasstrom auf einen Druckanstieg durch Verunreinigungen des Filters zurückzuführen ist. Auch kann das Filterelement nach einer vorab festgelegten Maximalzahl von Betriebszeitintervallen, d.h. Abreinigungsvorgängen, ersetzt werden.

Diese Kriterien können zusätzlich zu dem oben beschriebenen Intervallkriterium erfüllt sein müssen, um ein Ersetzen des Filterelements zu veranlassen. Sie können auch schon bei alleinigem Auftreten, d.h. ohne dass das oben beschriebene Intervallkriterium erfüllt ist, das Ersetzen des Filterelements veranlassen.

Die Umluftfiltervorrichtung kann auch mehrere Filterelemente umfassen. Für das Ersetzen der einzelnen Filterelemente kann ein gemeinsamer Zeitpunkt ermittelt werden, oder es können separate Zeitpunkte für die einzelnen Filterelemente ermittelt werden, Ferner muss die Umluftfiltervorrichtung kein geschlossener Gaskreislauf sein, es kann auch Gas von außen zu- und/oder abgeführt werden.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen, Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird,

Als Aufbaumaterial können verschiedene Arten von Pulver verwendet werden, insbesondere Metallpulver, Kunststoffpulver, Keramikpulver, Sand, gefüllte oder gemischte Pulver. Anstelle von Pulver können auch andere geeignete Materialien als Aufbaumaterial verwendet werden.

Als Schutzgas wird je nach Aufbaumaterial ein Gas verwendet, das mit dem Aufbaumaterial im Wesentlichen keine chemischen Reaktionen eingeht, beispielsweise bei Kunststoffpulver vorzugsweise Stickstoff oder bei Metallpulver vorzugsweise Argon und/oder Stickstoff.

Die oben im Zusammenhang mit einer Lasersinter- bzw. Laserschmelzvorrichtung beschriebene Umluftfiltervorrichtung kann auch in anderen Anlagen verwendet werden, die ein Umluftsystem mit einem geschlossenen Gaskreislauf enthalten, vorzugsweise mit einem geschlossenen Schutzgaskreislauf. Die in der obigen Ausführungsform für eine Vorrichtung bzw. ein Verfahren zum schichtweisen Herstellen eines dreidimensionalen Objekts beschriebenen Merkmale gelten auch allgemein für eine Vorrichtung und ein Verfahren zum Filtern eines Gases mittels abreinigbarer Filterelemente und umgekehrt.

## Patentansprüche

1. Verfahren zum Ermitteln eines Zeitpunkts für das Ersetzen eines abreinigbaren Filterelements in einem Gasstrom,
wobei in dem Gasstrom ein Filterelement vorgesehen ist, das jeweils nach einem Betriebszeitintervall (T1, T2, ..., T7, Tn) abzureinigen ist und welches spätestens nach einer Anzahl A von Betriebszeitintervallen (T1, T2, ..., T7, Tn) durch ein Auswechsel-Filterelement zu ersetzen ist, mit den Schritten
Messen eines Messzeitraums (Schritt S1), der jeweils in einem Betriebszeitintervall ab einem definierten Anfangszeitpunkt verstreicht, bis ein definierter Differenzdruck zwischen dem Druck stromaufwärts und dem Druck stromabwärts von dem Filterelement im Gasstrom erreicht wird, während mindestens zweier Betriebszeitintervalle,
Erzeugen eines Referenzwerts (R) für die Messzeiträume (Schritt S2), Vergleichen (Schritt S4) eines gemessenen Messzeitraums für ein beliebiges nachfolgendes Betriebszeitintervall mit dem Referenzwert (R),
Erzeugen eines Signals (Schritt S6), wenn der gemessene Messzeitraum für das beliebige nachfolgende Betriebszeitintervall relativ zu dem Referenzwert (R) um ein vorbestimmtes Maß verkürzt ist,
wobei mindestens das erste, bevorzugt das erste und das zweite, noch bevorzugter das erste bis n-te Betriebszeitintervall, wobei n um einen vorbestimmten Wert kleiner als A ist, zur Bildung des Referenzwerts nicht herangezogen wird.

2. Verfahren nach Anspruch 1, wobei das Signal erzeugt wird, wenn der gemessene Messzeitraum relativ zu dem Referenzwert (R) um mindestens 10%, bevorzugt mindestens 20%, noch mehr bevorzugt um mindestens 30% verkürzt ist.

3. Verfahren nach Anspruch 1 oder 2, wobei das Signal den Zeitpunkt angibt, zu dem es erforderlich ist, das Filterelement durch das Auswechsel-Filterelement zu ersetzen.

4. Verfahren nach einem der Ansprüche 1 bis 3, wobei zur Berechnung des Referenzwerts (R) drei oder mehr Betriebszeitintervalle (T1, T2, ..., T7, Tn) herangezogen werden.

5. Verfahren nach einem der Ansprüche 1 bis 4, wobei in Abhängigkeit von einer Varianz der für die Referenzwertbildung gemessenen Messzeiträume bestimmte Betriebszeitintervalle (T1, T2, ..., T7, Tn) bei der Erzeugung des Referenzwerts (R) nicht herangezogen werden, vorzugsweise solche, die auf das erste Betriebszeitintervall (T1) folgen, und/oder zusätzliche Betriebszeitintervalle (T1, T2, ..., T7, Tn) bei der Erzeugung des Referenzwerts (R) hinzugezogen werden, vorzugsweise solche, die auf einen letzten für die Referenzwertbildung gemessenen Messzeitraum folgen.

6. Verfahren nach einem der Ansprüche 1 bis 5, wobei der Gasstrom Teil eines geschlossenen Gaskreislaufs ist, in dem eine Umwälzturbine vorgesehen ist, und wobei das Signal erzeugt wird, wenn eine Turbinenlaufzeit in einem vorbestimmten Bereich liegt und/oder wenn ein Anstieg der Turbinenleistung in einem vorbestimmten Bereich liegt.

7. Verfahren nach einem der Ansprüche 1 bis 6, wobei das Auswechsel- Filterelement ein gebrauchtes Filterelement ist.

8. Verfahren nach einem der Ansprüche 1 bis 7, wobei die Betriebszeitintervalle (T1, T2, ..., T7, Tn), die für die Referenzwertbildung nicht herangezogen werden um mindestens ein vorbestimmtes Maß länger sind, als die Betriebszeitintervalle, die für die Referenzwertbildung herangezogen werden.

9. Verfahren nach einem der Ansprüche 1 bis 8, wobei der Referenzwert (R) für die Messzeiträume anhand eines Durchschnittswerts der gemessenen Messzeiträume erzeugt wird.

10. Verfahren zum Filtern eines Gases in einem Umluftsystem mit einem, bevorzugt geschlossenen, Gaskreislauf, das die Schritte enthält:
Leiten des Gases durch ein abreinigbares Filterelement,
Abreinigen des abreinigbaren Filterelements nach jeweils einem Betriebszeitintervall (T1, T2, ..., T7, Tn) und
Ersetzen des Filterelements spätestens nach einer Anzahl A von Betriebszeitintervallen (T1, T2, ..., T7, Tn) durch ein Auswechsel-Filterelement,
wobei der Zeitpunkt für das Ersetzen des Filterelements nach einem Verfahren nach einem der Ansprüche 1 bis 9 bestimmt wird.

11. Verfahren zum Herstellen eines dreidimensionalen Objekts (2) durch schichtweises Aufbringen und selektives Verfestigen von Aufbaumaterial mit den Schritten
(a) Aufbringen einer Schicht des Aufbaumaterials innerhalb eines Baufelds im Inneren einer Prozesskammer (3),
(b) selektives Verfestigen der aufgebrachten Schicht durch Verfestigen der Stellen der Schicht, die dem Querschnitt des dreidimensionalen Objekts (2) in der Schicht entsprechen, insbesondere mittels Einwirkung einer Strahlung,
(c) Wiederholen der Schritte (a) und (b), bis das dreidimensionale Objekt (2) fertiggestellt ist,
wobei während der Herstellung des dreidimensionalen Objekts (2) ein Gas durch die Prozesskammer (4) geleitet wird,
wobei das Gas in einem, bevorzugt geschlossenen, Gaskreislauf umläuft und durch ein abreinigbares Filterelement geleitet wird, das abreinigbaren Filterelement nach jeweils einem Betriebszeitintervall (T1, T2, ..., T7, Tn) abgereinigt wird und das Filterelement spätestens nach einer Anzahl A von Betriebszeitintervallen (T1, T2, ..., T7, Tn) durch ein Auswechsel-Filterelement ersetzt wird, und wobei
der Zeitpunkt für das Ersetzen eines Filterelements nach einem Verfahren der Ansprüche 1 bis 9 bestimmt wird.

12. Verfahren nach Anspruch 11, wobei das Signal erzeugt wird, wenn eine Dauer der Betriebszeit einer eine Strahlung (22) erzeugenden Strahlungsquelle (21) ein vorbestimmtes Maß übersteigt.

13. Filtervorrichtung (40)
mit einem in einem Gasstrom befindlichen abreinigbaren Filterelement, das jeweils nach einem Betriebszeitintervall (T1, T2, ..., T7, Tn) abzureinigen ist und welches spätestens nach einer Anzahl A von Betriebszeitintervallen (T1, T2, ..., T7, Tn) durch ein Auswechsel-Filterelement zu ersetzen ist,
mit einer Messvorrichtung zum Messen eines Messzeitraums, der jeweils in einem Betriebszeitintervall (T1, T2, ..., T7, Tn) ab einem definierten Anfangszeitpunkt verstreicht, bis ein Differenzdruck zwischen dem Druck stromaufwärts und dem Druck stromabwärts von dem Filterelement im Gasstrom erreicht wird, während mindestens zweier Betriebszeitintervalle,
und mit einer Signalerzeugungsvorrichtung,
wobei die Filtervorrichtung (40) ausgebildet ist, einen Zeitpunkt für das Einsetzen des Auswechsel-Filterelements in der Filtervorrichtung nach einem Verfahren der Ansprüche 1 bis 9 zu ermitteln.

14. Vorrichtung zum Herstellen eines dreidimensionalen Objekts (2) durch schichtweises Aufbringen und selektives Verfestigen von Aufbaumaterial mit
einer Prozesskammer (3) zum Herstellen des dreidimensionalen Objekts (2),
einer Einrichtung zum Leiten eines Gasstroms durch die Prozesskammer (3) und
einer Verfestigungseinrichtung (20) zum Verfestigen des Aufbaumaterials,
wobei die Einrichtung zum Leiten eines Gasstroms durch die Prozesskammer eine Filtervorrichtung (40) nach Anspruch 13 aufweist.

15. Vorrichtung nach Anspruch 14, wobei die Einrichtung zum Leiten eines Gasstroms durch die Prozesskammer (3) als System mit geschlossenem Gaskreislauf ausgebildet ist.

## Claims

1. A method for determining a point in time for the replacement of a cleanable filter element in a gas stream,
wherein a filter element is provided in the gas stream, which filter element is to be cleaned after one operating time interval (T1, T2, ..., T7, Tn) each and which is to be replaced by a replacement filter element after a number A of operating time intervals (T1, T2, ..., T7, Tn) at the latest, the method comprising the steps of:
measurement of a measuring period (step S1) elapsing in an operating time interval each from a defined starting time until a defined differential pressure between the pressure upstream and the pressure downstream of the filter element in the gas stream is reached, during at least two operating time intervals,
generation of a reference value (R) for the measuring periods (step S2),
comparing (step S4) a measured measuring period for any subsequent operating time interval with the reference value (R),
generation of a signal (step S6) if the measured measuring period for the subsequent operating time interval is shorter by a predetermined amount relative to the reference value (R),
wherein at least the first, preferably the first and the second, more preferably the first to n-th operating time intervals, n being smaller than A by a predetermined value, is not used for generating the reference value.

2. The method according to claim 1, wherein the signal is generated when the measured measurement period is shortened relative to the reference value (R) by at least 10%, preferably at least 20%, more preferably by at least 30%.

3. The method according to claim 1 or 2, wherein the signal indicates the point in time when it is necessary to replace the filter element by the replacement filter element.

4. The method according to one of claims 1 to 3, wherein three or more operating time intervals (T1, T2, ..., T7, Tn) are used to calculate the reference value (R).

5. The method according to one of claims 1 to 4, wherein, depending on a variance of the measuring periods measured for the generation of the reference value, specific operating time intervals (T1, T2, ..., T7, Tn) are not used in the generation of the reference value (R), preferably such operating time intervals which follow the first operating time interval (T1), and/or additional operating time intervals (T1, T2, ..., T7, Tn) are included in the generation of the reference value (R), preferably such operating time intervals which follow a last measuring period measured for the generation of the reference value.

6. The method according to one of claims 1 to 5, wherein the gas stream is part of a closed gas circuit in which a circulating turbine is provided and wherein the signal is generated when a turbine operating time is within a predetermined range and/or when an increase in turbine power is in a predetermined range

7. The method according to one of claims 1 to 6, wherein the replacement filter element is a used filter element.

8. The method according to one of claims 1 to 7, wherein the operating time intervals (T1, T2, ..., T7, Tn) which are not used for the generation of the reference value are longer by at least a predetermined amount than the operating time intervals used for the generation of the reference value.

9. The method according to one of claims 1 to 8, wherein the reference value (R) for the measuring periods is generated on the basis of an average value of the measured measuring periods.

10. A method for filtering a gas in an air recirculating system with a, preferably closed, gas circuit, the method comprising the steps:
passing the gas through a cleanable filter element,
cleaning the cleanable filter element after one operating time interval (T1, T2, ..., T7, Tn) each and
replacing the filter element by a replacement filter element after a number A of operating time intervals (T1, T2, ..., T7, Tn) at the latest,
wherein the point in time for the replacement of the filter element is determined in a method according to one of claims 1 to 9.

11. A method for producing a three-dimensional object (2) by layer-wise applying and selectively solidifying a building material with the steps of
(a) applying a layer of the building material within a build area inside a process chamber (3),
(b) selectively solidifying the applied layer by solidifying the locations of the layer that correspond to the cross-section of the three-dimensional object (2) in the layer, in particular by means of exposure to a radiation,
(c) repeating steps (a) and (b) until the three-dimensional object (2) is completed,
wherein a gas is passed through the process chamber (4) during the production of the three-dimensional object (2),
wherein the gas circulates in a, preferably closed, gas circuit and passes through a cleanable filter element, the cleanable filter element is cleaned after one operating time interval (T1, T2, ..., T7, Tn) each and the filter element is replaced by a replacement filter element after a number A of operating time intervals (T1, T2, ..., T7, Tn) at the latest, and wherein
the point in time for the replacement of a filter element is determined in a method according to one of claims 1 to 9.

12. The method according to claim 11, wherein the signal is generated when a duration of the operating time of a radiation source (21) generating a radiation (22) exceeds a predetermined amount.

13. A filter device (40) with a cleanable filter element located in a gas stream, which filter element is to be cleaned after one operating time interval (T1, T2, ..., T7, Tn) each and which is to be replaced by a replacement filter element after a number A of operating time intervals (T1, T2, ..., T7, Tn) at the latest,
with a measuring device for measuring a measuring period that elapses in an operating time interval (T1, T2, ..., T7, Tn) each from a defined starting time until a differential pressure between the pressure upstream and the pressure downstream of the filter element in the gas stream is reached, during at least two operating time intervals,
and with a signal generating device,
wherein the filter device (40) is configured to determine a point in time for the insertion of the replacement filter element in the filter device according to a method of one of claims 1 to 9.

14. A device for producing a three-dimensional object (2) by layer-wise applying and selectively solidifying a building material with
a process chamber (3) for producing the three-dimensional object (2),
a device for passing a gas stream through the process chamber (3) and
a solidification device (20) for solidifying the building material,
wherein the device for passing a gas stream through the process chamber comprises a filter device (40) according to claim 13.

15. The device according to claim 14, wherein the device for passing a gas stream through the process chamber (3) is designed as a system with a closed gas circuit.

## Revendications

1. Procédé pour déterminer un moment pour le remplacement d'un élément filtre pouvant être nettoyé dans un courant de gaz,
dans lequel un élément filtre est prévu dans le courant de gaz, qui est à nettoyer respectivement après un intervalle de temps de fonctionnement (T1, T2, ..., T7, Tn) et lequel est à remplacer au plus tard après un nombre A d'intervalles de temps de fonctionnement (T1, T2, ..., T7, Tn) par un élément filtre de remplacement, avec les étapes
de mesure d'une période de mesure (étape S1) qui s'écoule respectivement dans un intervalle de temps de fonctionnement à partir d'un moment de début défini, jusqu'à ce qu'une différence de pression définie entre la pression en amont et la pression en aval soit atteinte par l'élément filtre dans le courant de gaz, pendant au moins deux intervalles de temps de fonctionnement,
de génération d'une valeur de référence (R) pour les périodes de mesure (étape S2),
de comparaison (étape S4) d'une période de mesure mesurée pour un intervalle de temps de fonctionnement suivant quelconque avec la valeur de référence (R)
de génération d'un signal (étape S6) lorsque la période de mesure mesurée pour l'intervalle de temps de fonctionnement suivant quelconque est raccourcie d'une grandeur prédéfinie par rapport à la valeur de référence (R),
dans lequel au moins le premier, de préférence le premier et le deuxième, de préférence encore le premier au nième intervalle de temps de fonctionnement, dans lequel n est plus petit d'une valeur prédéfinie que A, n'est pas utilisé pour la formation de la valeur de référence.

2. Procédé selon la revendication 1, dans lequel le signal est généré lorsque la période de mesure mesurée est raccourcie d'au moins 10 %, de préférence d'au moins 20 %, encore plus préférentiellement d'au moins 30 % par rapport à la valeur de référence (R).

3. Procédé selon la revendication 1 ou 2, dans lequel le signal indique le moment auquel il est nécessaire de remplacer l'élément filtre par l'élément filtre de remplacement.

4. Procédé selon l'une quelconque des revendications 1 à 3, dans lequel trois intervalles de temps de fonctionnement (T1, T2, ..., T7, Tn) ou plus sont utilisés pour le calcul de la valeur de référence (R).

5. Procédé selon l'une quelconque des revendications 1 à 4, dans lequel, en fonction d'une variance des périodes de mesure mesurées pour la formation de valeur de référence, des intervalles de temps de fonctionnement (T1, T2, ..., T7, Tn) définis ne sont pas utilisés lors de la génération de la valeur de référence (R), de préférence ceux qui succèdent au premier intervalle de temps de fonctionnement (T1), et/ou des intervalles de temps de fonctionnement (T1, T2, ..., T7, Tn) supplémentaires sont mis à contribution lors de la génération de la valeur de référence (R), de préférence ceux qui succèdent à une dernière période de mesure mesurée pour la formation de valeur de référence.

6. Procédé selon l'une quelconque des revendications 1 à 5, dans lequel le courant de gaz fait partie d'un circuit de gaz fermé dans lequel est prévue une turbine de circulation, et dans lequel le signal est généré lorsqu'un temps de marche de turbine se situe dans une plage prédéfinie et/ou lorsqu'une augmentation de la puissance de turbine se situe dans une plage prédéfinie.

7. Procédé selon l'une quelconque des revendications 1 à 6, dans lequel l'élément filtre de remplacement est un élément filtre usagé.

8. Procédé selon l'une quelconque des revendications 1 à 7, dans lequel les intervalles de temps de fonctionnement (T1, T2, ..., T7, Tn) qui ne sont pas utilisés pour la formation de valeur de référence sont plus longs d'au moins une grandeur prédéfinie que les intervalles de temps de fonctionnement qui sont utilisés pour la formation de valeur de référence.

9. Procédé selon l'une quelconque des revendications 1 à 8, dans lequel la valeur de référence (R) pour les périodes de mesure est générée sur la base d'une valeur moyenne des périodes de mesure mesurées.

10. Procédé pour filtrer un gaz dans un système de circulation avec un circuit de gaz, de préférence fermé, qui contient les étapes :
d'acheminement du gaz à travers un élément filtre pouvant être nettoyé,
de nettoyage de l'élément filtre pouvant être nettoyé après respectivement un intervalle de temps de fonctionnement (T1, T2, ..., T7, Tn) et
de remplacement de l'élément filtre au plus tard après un nombre A d'intervalles de temps de fonctionnement (T1, T2, ..., T7, Tn) par un élément filtre de remplacement,
dans lequel le moment pour le remplacement de l'élément filtre est défini d'après un procédé selon l'une quelconque des revendications 1 à 9.

11. Procédé pour fabriquer un objet tridimensionnel (2) par application couche par couche et solidification sélective d'un matériau de construction avec les étapes
(a) d'application d'une couche du matériau de construction à l'intérieur d'un champ de construction à l'intérieur d'une chambre de traitement (3),
(b) de solidification sélective de la couche appliquée par solidification des endroits de la couche qui correspondent à la section transversale de l'objet tridimensionnel (2) dans la couche, en particulier au moyen de l'action d'un rayonnement,
(c) de répétition des étapes (a) et (b), jusqu'à ce que l'objet tridimensionnel (2) ait été achevé,
dans lequel, pendant la fabrication de l'objet tridimensionnel (2), un gaz est acheminé à travers la chambre de traitement (4),
dans lequel le gaz circule dans un circuit de gaz, de préférence fermé, et est acheminé à travers un élément filtre pouvant être nettoyé, l'élément filtre pouvant être nettoyé est nettoyé après respectivement un intervalle de temps de fonctionnement (T1, T2, ..., T7, Tn) et l'élément filtre est remplacé au plus tard après un nombre A d'intervalles de temps de fonctionnement (T1, T2, ..., T7, Tn) par un élément filtre de remplacement, et dans lequel
le moment pour le remplacement d'un élément filtre est défini d'après un procédé des revendications 1 à 9.

12. Procédé selon la revendication 11, dans lequel le signal est généré lorsqu'une durée du temps de fonctionnement d'une source de rayonnement (21) générant un rayonnement (22) dépasse une grandeur prédéfinie.

13. Dispositif de filtration (40)
avec un élément filtre pouvant être nettoyé, se trouvant dans un courant de gaz, qui est à nettoyer respectivement après un intervalle de temps de fonctionnement (T1, T2, ..., T7, Tn) et lequel est à remplacer par un élément filtre de remplacement au plus tard après un nombre A d'intervalles de temps de fonctionnement (T1, T2, ..., T7, Tn),
avec un dispositif de mesure pour mesurer une période de mesure qui s'écoule respectivement dans un intervalle de temps de fonctionnement (T1, T2, ..., T7, Tn) à partir d'un moment initial défini, jusqu'à ce qu'une différence de pression entre la pression en amont et la pression en aval soit atteinte par l'élément filtre dans le courant de gaz, pendant au moins deux intervalles de temps de fonctionnement,
et avec un dispositif de génération de signal,
dans lequel le dispositif de filtration (40) est réalisé pour déterminer un moment pour l'insertion de l'élément filtre de remplacement dans le dispositif de filtration d'après un procédé des revendications 1 à 9.

14. Dispositif pour fabriquer un objet tridimensionnel (2) par application couche par couche et solidification sélective de matériau de construction avec
une chambre de traitement (3) pour fabriquer l'objet tridimensionnel (2),
un système pour acheminer un courant de gaz à travers la chambre de traitement (3) et
un système de solidification (20) pour solidifier le matériau de construction,
dans lequel le système pour acheminer un courant de gaz à travers la chambre de traitement présente un dispositif de filtration (40) selon la revendication 13.

15. Dispositif selon la revendication 14, dans lequel le système pour acheminer un courant de gaz à travers la chambre de traitement (3) est réalisé sous la forme d'un système avec circuit de gaz fermé.
